(19) Europäisches Patentamt / European Patent Office / Office européen des brevets

(11) **EP 3 038 011 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(51) Int Cl.:
*G06K 9/00* (2006.01)    *G06K 9/62* (2006.01)
*G06K 9/32* (2006.01)

(21) Anmeldenummer: **14199767.6**

(22) Anmeldetag: **22.12.2014**

(54) **Verfahren zum Bestimmen des Abstands eines Objekts von einem Kraftfahrzeug mittels einer monokularen Bilderfassungseinrichtung**

Method for determining the distance between an object and a motor vehicle by means of a monocular imaging device

Procédé de détermination de la distance entre un objet et un véhicule automobile au moyen d'un dispositif de détection d'image monoculaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.06.2016 Patentblatt 2016/26**

(73) Patentinhaber: **Aptiv Technologies Limited St. Michael (BB)**

(72) Erfinder:
- **Leßmann, Stephanie**
  **42349 Wuppertal (DE)**
- **Meuter, Mirko**
  **40699 Erkrath (DE)**
- **Müller, Dennis**
  **47445 Moers (DE)**

(74) Vertreter: **Robert, Vincent**
**Aptiv Services France SAS**
**Aptiv EMEA Patent Department**
**Bâtiment Le Raspail - Paris Nord 2**
**22, avenue des Nations**
**CS 65059 Villepinte**
**95972 Roissy CDG Cedex (FR)**

(56) Entgegenhaltungen:
EP-A1- 2 562 681    WO-A1-2013/081984
DE-A1-102010 015 532    DE-A1-102012 210 145

- U Chun Lao ET AL: "Hit Me If You Can", Cornell University Course CS4758/6758: Robot Learning, 16. Mai 2012 (2012-05-16), Seiten 1-8, XP055193582, Gefunden im Internet: URL:http://www.cs.cornell.edu/courses/cs4758/2012sp/final_projects/spring2012/flavian_uchun_hmiyc.pdf [gefunden am 2015-06-03]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Bestimmen des Abstands eines Objekts von einem Kraftfahrzeug mittels einer monokularen Bilderfassungseinrichtung, die in einer vorgegebenen Höhe über der Fahrbahnebene an dem Kraftfahrzeug angeordnet ist, wobei mittels der monokularen Bilderfassungseinrichtung in zeitlichen Abständen Bilder der Fahrzeugumgebung aufgenommen werden und mittels eines Bildverarbeitungssystems in den aufgenommenen Bildern wenigstens ein interessierendes Objekt erkannt und einer Objektklasse zugeordnet wird.

Bildbasierte Objekterkennungs-Verfahren sind für verschiedene Fahrerassistenzsysteme in modernen Kraftfahrzeugen bedeutsam, wie z. B. für Spurwechselassistenten, Abstandsregelsysteme oder Fußgängerschutzsysteme. Bei der monokularen Bilderfassungseinrichtung kann es sich um eine Kamera mit einem einzelnen Objektiv handeln, welche an dem Kraftfahrzeug befestigt ist und zum Beispiel Bilder des vordem Kraftfahrzeug befindlichen Verkehrsraums aufnimmt. Das Kraftfahrzeug, welches die Kamera trägt, wird auch als "Host-Fahrzeug" bezeichnet. Computergestützte Bildverarbeitungssysteme sind in der Lage, in solchen Kamerabildern mit relativ hoher Zuverlässigkeit interessierende Objekte wie Fahrbahnmarkierungen, Verkehrszeichen, Fußgänger und Fremdfahrzeuge zu identifizieren und gegebenenfalls mittels eines Tracking-Verfahrens zu verfolgen.

Insbesondere bei sicherheitsrelevanten Systemen ist eine zuverlässige Schätzung der absoluten Abstände erkannter Objekte vom Host-Fahrzeug erforderlich, um so z. B. drohenden Kollisionen rechtzeitig entgegenwirken zu können. Naturgemäß tragen Bilder, die von monokularen Bilderfassungseinrichtungen aufgenommen wurden, keine direkt extrahierbare Tiefeninformation, sodass das Ermitteln von Objektabständen unter ausschließlicher Verwendung einer monokularen Bilderfassungseinrichtung schwierig ist. Das Bildverarbeitungssystem kann die gewünschte Tiefeninformation im Prinzip aus A-priori-Informationen ableiten, beispielsweise unter Verwendung der Annahme, dass ein erkanntes Objekt eine vorgegebene Standard-Breite aufweist. Ein Objektverfolgungsverfahren, das auf angenommenen Objektbreiten beruht, ist in der EP 2 562 681 A1 offenbart.

Es versteht sich jedoch, dass solche Annahmen in der Praxis häufig nicht oder nicht exakt genug erfüllt sind und dadurch inakzeptable Fehler in die zugehörige Berechnung eingehen. Insbesondere für sicherheitskritische Anwendungen wie autonomes Fahren sind herkömmliche Verfahren zur Abstandsbestimmung mittels einer monokularen Bilderfassungseinrichtung unter Verwendung von A-priori-Informationen kaum geeignet. Der Einsatz von Stereo-Kameras oder separaten Abstandssensoren ist hingegen aus Kostengründen unerwünscht.

Es ist daher eine Aufgabe der Erfindung, ein robustes und exaktes Verfahren zum Bestimmen des Abstands eines Objekts von einem Kraftfahrzeug anzugeben, das unter ausschließlicher Verwendung einer monokularen Bilderfassungseinrichtung als Messvorrichtung durchführbar ist.

Die Lösung der Aufgabe erfolgt durch ein Verfahren mit den Merkmalen des Anspruchs 1.

Ein erfindungsgemäßes Verfahren sieht vor, dass aus den aufgenommenen Bildern unter Verwendung eines Lochkameramodells beruhend auf der Objektklasse jeweilige Positionsangaben ermittelt werden, welche die Lage eines Bezugspunkts des erkannten Objekts bezogen auf die Fahrbahnebene in Weltkoordinaten angeben, dass der Skalierungsfaktor des Lochkameramodells mittels eines Bayes-Schätzers unter Verwendung der Positionsangaben als Beobachtungen sowie unter der Annahme, dass sich der Bezugspunkt des erkannten Objekts mit einer vorgegebenen Wahrscheinlichkeit auf der Fahrbahnebene befindet, geschätzt wird, und dass aus dem geschätzten Skalierungsfaktor unter Verwendung des Lochkameramodells der Abstand des erkannten Objekts von dem Kraftfahrzeug berechnet wird.

Lochkameramodelle sind auf dem Fachgebiet grundsätzlich bekannt und werden beispielsweise bei Tracking-Verfahren zur Umrechnung zwischen Bildkoordinaten und Weltkoordinaten verwendet. Durch Festlegung eines Projektionszentrums oder Ursprungs sowie einer Bildebene ist ein Lochkameramodell vollständig bestimmt. Die Projektion eines Weltpunkts oder Szenepunkts in die Bildebene ist hierbei durch Multiplikation einer Projektionsmatrix mit dem entsprechenden Weltkoordinaten-Vektor beschrieben. Aufgrund der Abbildung der dreidimensionalen Welt auf die zweidimensionale Bildebene können die zu einem bestimmten Bildpunkt gehörenden Weltkoordinaten nicht eindeutig angegeben werden, sondern nur unter der Maßgabe eines unbekannten konstanten Faktors. Dieser Faktor wird Skalierungsfaktor genannt. Erfindungsgemäß wurde erkannt, dass sich eine Schätzung dieses Skalierungsfaktors mittels eines Bayes-Schätzers in effizienter Weise für eine Ermittlung des Objektabstands heranziehen lässt. Die Bestimmung des absoluten Abstands eines erkannten Objekts von dem Host-Fahrzeug anhand des geschätzten Skalierungsfaktors ist nämlich durch entsprechende Umformung der Projektionsgleichung des Lochkameramodells möglich.

Bei der Schätzung des Skalierungsfaktors wird als A-priori-Information die Erkenntnis genutzt, dass sich bestimmte erkannte Objekte wie Fußgänger oder Fahrzeuge stets auf dem Boden befinden und dass somit ein bodenseitiger Bezugspunkt solcher Objekte stets in der Fahrbahnebene liegt. Diese A-priori-Information kann jedoch im Allgemeinen nicht als streng gültige Annahme verwendet werden, da sie aufgrund von unvermeidlichen, z. B. durch Nickbewegungen der Bilderfassungseinrichtung verursachten Fehlern zu häufig und zu stark verletzt wäre. Daher werden gewissermaßen die Positionsabweichungen der Objekte in Bezug auf die Fahrbahnebene unter Verwendung des Lochkameramodells ermittelt und als Beobachtungen eines Bayes-Schätzers herangezogen. Als zu schätzender Parameter wird der Skalierungsfaktor des Lochkameramodells herangezogen, das heißt es wird mittels des Bayes-Schätzers bestimmt, welche A-posteriori-Verteilung des Skalierungsfaktors am besten zu den Beobachtungsdaten passt. Als eigentlicher Schätzwert kann dann ein Lagemaß der ermittelten A-posteriori-Verteilung verwendet werden.

Es hat sich herausgestellt, dass die Schätzung des Skalierungsfaktors mittels eines Bayes-Schätzers besonders robust und zuverlässig ist und demzufolge zu besonders exakten Ergebnissen der Abstandsbestimmung führt. Der geschätzte Skalierungsfaktor kann nicht nur zur Ermittlung des Objektabstands verwendet werden, sondern in vorteilhafter Weise auch direkt für ein separates Tracking des betreffenden Objekts, beispielsweise unter Verwendung eines Kalman-Filters.

Weiterbildungen der Erfindung sind den abhängigen Ansprüchen, der Beschreibung sowie der beigefügten Zeichnung zu entnehmen.

Vorzugsweise wird dem Bayes-Schätzer als weitere Annahme zugrunde gelegt, dass die Breite des erkannten und einer Objektklasse zugeordneten Objekts mit einer vorgegebenen Wahrscheinlichkeit einen von mindestens einem der Objektklasse zugeordneten Standardwert annimmt. Dies trägt dem Umstand Rechnung, dass gängige Bildverarbeitungssysteme relativ zuverlässige Klassifizierungen vornehmen können und somit hinsichtlich der tatsächlichen Breite eines im Bild erkannten Objekts ein vergleichsweise solides Vorwissen besteht. Mit anderen Worten kann die Breite eines erfolgreich erkannten und klassifizierten Objekts im Allgemeinen auf einen relativ engen Bereich begrenzt werden. Der Bayes-Schätzer wird bei dieser Ausführungsform dazu verwendet, unterschiedliche und voneinander unabhängige Quellen von A-priori-Information, nämlich eine Lokalisierung von Verkehrsteilnehmern auf der Fahrbahnebene einerseits und eine Vorgabe von Standardbreiten für klassifizierte Objekte andererseits, miteinander zu fusionieren. Durch eine solche Fusion kann die Robustheit der Schätzung erheblich gesteigert werden.

Eine weitere Ausführungsform der Erfindung sieht vor, dass der Annahme, dass sich der Bezugspunkt des erkannten Objekts mit einer vorgegebenen Wahrscheinlichkeit auf der Fahrbahnebene befindet, durch eine kontinuierliche A-priori-Verteilung modelliert wird, wohingegen die Annahme, dass die Breite des erkannten Objekts mit einer vorgegebenen Wahrscheinlichkeit einen Standardwert annimmt, durch eine diskrete A-priori-Verteilung modelliert wird. Es hat sich herausgestellt, dass sich die Objektbreite durch einen finiten Satz von Standardwerten ausreichend genau angeben lässt. Der Bayes-Schätzer ermöglicht in vorteilhafter Weise die Fusion von kontinuierlichen und diskreten A-priori-Informationen.

Bevorzugt werden als Beobachtungen für den Bayes-Schätzer Ergebnisse einer zeitlichen Filterung der Positionsangaben verwendet, insbesondere wobei für die Positionsangaben zeitliche Mittelwerte über jeweils mehrere nacheinander aufgenommene Bilder gebildet werden. Durch die zeitliche Mittelung können Störeinflüsse wie Nickbewegungen der Kamera ausgeglichen werden, wodurch die Zuverlässigkeit des Schätzverfahrens beträchtlich gesteigert wird. Als Mittelwert kann je nach Anwendung das arithmetische Mittel, der Median oder ein ähnlicher Wert gewählt werden.

Der Skalierungsfaktor des Lochkameramodells kann durch Bestimmung des Modalwerts der A-posteriori-Verteilung der Beobachtungen geschätzt werden. Mit anderen Worten wird bevorzugt die Maximalstelle der Dichtefunktion der A-posteriori-Verteilung als Schätzwert für den Skalierungsfaktor verwendet. Dies ergibt eine besonders zuverlässige Schätzung. Grundsätzlich könnte auch der Erwartungswert, der Median oder ein anderes Lagemaß als Schätzwert herangezogen werden.

Vorzugsweise wird als Positionsangabe jeweils derjenige Neigungswinkel verwendet, den ein Sichtstrahl, welcher vom senkrecht auf die Fahrbahnebene projizierten Fahrzeugzentrum des Kraftfahrzeugs oder einem in bekanntem Abstand zu diesem angeordneten Fixpunkt zu dem Bezugspunkt des Objekts führt, zu der Fahrbahnebene einnimmt. Dieser Neigungswinkel kann in einfacher Weise aus den Weltkoordinaten und der Projektionsmatrix des Lochkameramodells abgeleitet werden und ist ein Maß für die Abweichung der Position des Objekts gegenüber einer Lokalisierung auf der Fahrbahnebene.

Als A-priori-Verteilung des Neigungswinkels kann insbesondere eine Normalverteilung um den Wert Null festgelegt werden. Dies ist insofern eine günstige Festlegung, als die Abweichung des Neigungswinkels vom Wert Null auf zahlreichen voneinander unabhängigen Fehlern beruht.

Es kann vorgesehen sein, dass die Bewegung des erkannten Objekts mittels eines Tracking-Verfahrens verfolgt wird, welches einen rekursiven Zustandsschätzer, insbesondere einen Kalman-Filter, verwendet, und dass der geschätzte Skalierungsfaktor als Eingabe für den rekursiven Zustandsschätzer verwendet wird. Der geschätzte Skalierungsfaktor erfüllt auf diese Weise gewissermaßen eine Doppelfunktion, indem er einerseits zum Ermitteln des Objektabstands und andererseits zum Verfolgen des Objekts mittels Tracking dient.

Das erkannte Objekt kann mittels eines Klassifizierers einer von mehreren Objektklassen zugeordnet werden, wobei für jede Objektklasse ein separater Breitenbereich und/oder ein separater Satz von diskreten Breitenwerten zur Festlegung der A-priori-Verteilung der Breite des erkannten Objekts definiert ist. Gängige Klassifizierer sind beispielsweise in der Lage, zuverlässig zwischen Fußgängern, Fahrrädern, Motorrädern, Personenkraftwagen, Kleintransportern und Lastkraftwagen zu unterscheiden. Jede dieser Objektklassen ist im Allgemeinen durch einen eng begrenzten Breitenbereich charakterisiert, sodass die A-priori-Verteilung mit ausreichender Zuverlässigkeit durch einen Breitenbereich oder einen Satz von diskreten Breitenwerten für jede Objektklasse festgelegt werden kann.

Gemäß einer speziellen Ausgestaltung der Erfindung wird das erkannte Objekt mittels des Klassifizierers einer der Objektklassen "Vierradfahrzeuge" und "Zweiradfahrzeuge" zugeordnet, wobei, bevorzugt, ein der Objektklasse "Vierradfahrzeuge" zugeordnetes Objekt einer der Unterklassen "Personenkraftwagen", "Kleintransporter" und "Lastwagen" zugeordnet wird. Eine derartige hierarchische Klasseneinteilung ermöglicht die Berücksichtigung sämtlicher gängiger Verkehrsteilnehmer, die durch das Host-Fahrzeug gefährdet sein könnten. Solche Verkehrsteilnehmer werden auch als "vulnerable road users" oder "VRUs" bezeichnet. Bei Bedarf kann der Klassifizierer auch "Fahrräder" und "Motorräder" als Unterklassen der Objektklasse "Zweiradfahrzeuge" und/oder eine Objektklasse "Fußgänger" berücksichtigen. Eine getrennte Behandlung der Objektklassen "Vierradfahrzeuge" und "Zweiradfahrzeuge", deren Breitenbereiche sich üblicherweise nicht überschneiden, ermöglicht das Einsparen von Rechenschritten und steht im Einklang mit der Moduleinteilung gängiger Klassifizierer.

Eine weitere Ausführungsform der Erfindung sieht vor, dass eine Grundwahrheit des Klassifizierers zum Lösen der Gleichungen des Bayes-Schätzers verwendet wird. Die Grundwahrheit kann z. B. diejenige Anzahl an Fahrzeugen repräsentieren, die überhaupt pro Objektklasse oder Objektunterklasse zu erwarten sind. Insbesondere können Grundwahrheitsklassen verwendet werden, welche die tatsächlichen Objektklassen in der Welt in Abgrenzung zu den beobachteten und vom Klassifizierer ausgegebenen Objektklassen darstellen. Solche Grundwahrheitsklassen liegen häufig als Elemente einer Klassenkonfusionsmatrix vor.

Es kann vorgesehen sein, dass für ein erkanntes Objekt und insbesondere für jedes erkannte Objekt ein kleinstes umschließendes Rechteck bestimmt wird, wobei als Bezugspunkt des erkannten Objekts ein am unteren Rand des kleinsten umschließenden Rechtecks befindlicher Fußpunkt gewählt wird. Solche kleinsten umschließenden Rechtecke, so genannte "bounding boxes", werden bei vielen Tracking-Anwendungen für die erkannten Objekte definiert. Vorzugsweise befindet sich der vorstehend genannte Fußpunkt in der Mitte des unteren Randes der zugehörigen bounding box. Bei einem Fußpunkt eines als Verkehrsteilnehmer erkannten Objekts ist die Annahme gerechtfertigt, dass er sich mit hoher Wahrscheinlichkeit in der Fahrbahnebene befindet.

Die Erfindung betrifft auch eine Vorrichtung zum Erkennen und Verfolgen eines Objekts von einem Kraftfahrzeug aus mit einer monokularen Bilderfassungseinrichtung, welche in einer vorgegebenen Höhe über der Fahrbahnebene an dem Kraftfahrzeug angeordnet ist und welche zum Aufnehmen von Bildern der Fahrzeugumgebung in zeitlichen Abständen ausgebildet ist, und mit einem Bildverarbeitungssystem, das zum Durchführen eines wie vorstehend beschriebenen Verfahrens ausgebildet ist. Das Bildverarbeitungssystem kann insbesondere computergestützt sein.

Ferner betrifft die Erfindung ein Computerprogrammprodukt, das Programmanweisungen enthält, die ein Verfahren der vorstehend beschriebenen Art ausführen, wenn das Computerprogramm auf einem Computer ausgeführt wird.

Die Erfindung wird nachfolgend beispielhaft unter Bezugnahme auf die Zeichnung beschrieben.

Fig. 1 ist eine schematische Darstellung einer erfindungsgemäßen Vorrichtung zum Erkennen und Verfolgen eines Objekts von einem Kraftfahrzeug aus.

Fig. 2 zeigt anhand eines Lochkameramodells den Zusammenhang zwischen dem Neigungswinkel eines Objektpunkts zu der Fahrbahnebene und dem Skalierungsfaktor des Lochkameramodells.

Fig. 3 ist ein Diagramm, welches in vereinfachter Form das Konzept eines erfindungsgemäßen Verfahrens zum Bestimmen des Abstands eines Objekts von einem Kraftfahrzeug darstellt.

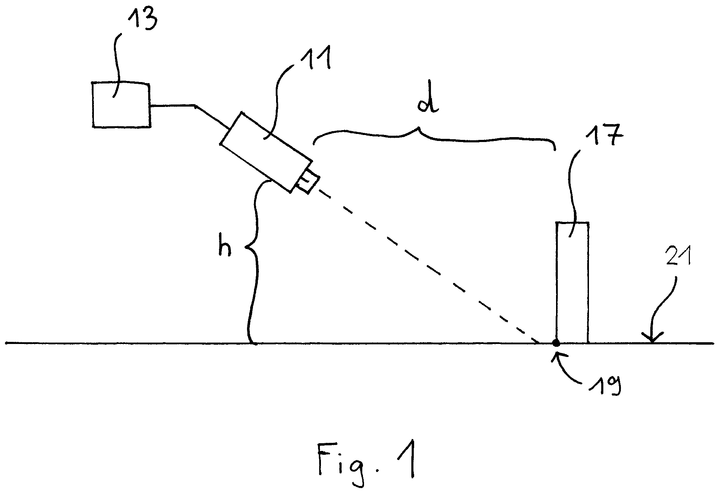

Eine erfindungsgemäße Vorrichtung umfasst eine in Fig. 1 lediglich schematisch dargestellte monokulare Bilderfassungseinrichtung 11, beispielsweise eine digitale Kamera, sowie ein der Bilderfassungseinrichtung 11 zugeordnetes, vorzugsweise computergestütztes Bildverarbeitungssystem 13. Die Bilderfassungseinrichtung 11 ist in einer vorgegebenen Höhe h über der Fahrbahnebene 21 an einem nicht gezeigten Kraftfahrzeug montiert und zum Aufnehmen von Bildern der Fahrzeugumgebung in regelmäßigen zeitlichen Abständen ausgebildet. Das Bildverarbeitungssystem 13 ist dazu ausgebildet, anhand der von der Bilderfassungseinrichtung 11 empfangenen Bilder interessierende Objekte 17 wie Fußgänger, Fremdfahrzeuge, Verkehrszeichen und dergleichen zu erkennen, zu klassifizieren und zu verfolgen. In Fig. 1 ist der Einfachheit halber lediglich ein Objekt 17 in schematischer Form dargestellt. Bevorzugt arbeitet das Bildverarbeitungssystem 13 für die Objekterkennung, -klassifizierung und -verfolgung mit wenigstens einem Klassifizierer und wenigstens einem rekursiven Zustandsschätzer, wie dies grundsätzlich bekannt ist.

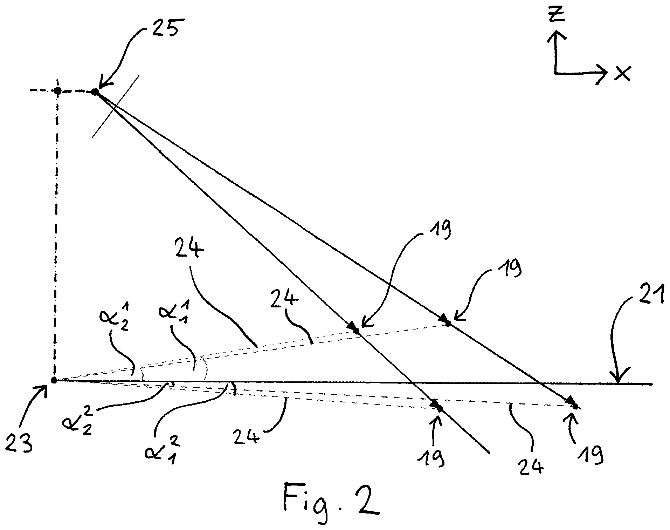

Um unter ausschließlicher Verwendung der monokularen Bilderfassungseinrichtung 11 den Abstand d eines interessierenden Objekts 17 von dem Kraftfahrzeug zu bestimmen, wird dieses mittels des Bildverarbeitungssystems 13 zunächst in üblicher Weise erkannt und einer Objektklasse zugeordnet. Im Rahmen dieses Prozesses wird für das erkannte Objekt 17 ein kleinstes umschließendes Rechteck - eine so genannte "bounding box" - bestimmt und ein am unteren Rand des kleinsten umschließenden Rechtecks in der Mitte befindlicher Fußpunkt 19 als Bezugspunkt für die weiteren Verarbeitungsschritte definiert. Die Bilderfassungseinrichtung 11 wird dann durch ein Lochkameramodell mathematisch modelliert, welches in Fig. 2 veranschaulicht ist.

Der Zusammenhang zwischen den Weltkoordinaten $x_w$, $y_w$, $z_w$ eines bestimmten Szenepunkts und den zuge-

hörigen Bildkoordinaten $x_i, y_i, z_i$ ist in dem Lochkameramodell durch die folgende Gleichung gegeben:

$$\begin{pmatrix} x_i \\ y_i \\ z_i \\ 1 \end{pmatrix} = C \cdot \begin{pmatrix} x_w \\ y_w \\ z_w \\ 1 \end{pmatrix}, \qquad (1)$$

Hierbei bezeichnet $C$ die Transformationsmatrix des Lochkameramodells. Die Position ($i_x, i_y$) des abgebildeten Punktes innerhalb der Bildebene kann dann wie folgt berechnet werden:

$$i_x = \frac{x_i}{z_i} = \frac{sx_i}{sz_i}$$

$$i_y = \frac{y_i}{z_i} = \frac{sy_i}{sz_i}$$

Diese Position innerhalb der Bildebene ist für jedes $s \neq 0$ gleich. Das heißt jede Multiplikation des Bildkoordinaten-Vektors mit einem Faktor $s$ ergibt die gleichen Bildpunkte. Mit der Gleichsetzung $p = 1/s$ sowie unter Verwendung von Hilfskoordinaten $x_w', y_w', z_w', \tilde{x}_w, \tilde{y}_w, \tilde{z}_w$ kann die Formel (1) folgendermaßen umgeschrieben werden:

$$s \cdot C_{3\times3}^{-1} \begin{pmatrix} x_i \\ y_i \\ z_i \end{pmatrix} + C_4^{-1} = \begin{pmatrix} x_w' \\ y_w' \\ z_w' \end{pmatrix}$$

$$\Leftrightarrow \frac{1}{p} \cdot \begin{pmatrix} \tilde{x}_w \\ \tilde{y}_w \\ \tilde{z}_w \end{pmatrix} + C_4^{-1} = \begin{pmatrix} x_w' \\ y_w' \\ z_w' \end{pmatrix} \qquad (2)$$

Hierbei bezeichnet $C^{-1}$ die Inverse der Transformationsmatrix. Der unbekannte Faktor $p$ wird als "Skalierungsfaktor" bezeichnet.

Bei einem erfindungsgemäßen Verfahren wird dieser Skalierungsfaktor $p$ des Lochkameramodells mittels eines Bayes-Schätzers geschätzt, wobei als Vorwissen die Annahme verwendet wird, dass sich der Fußpunkt 19 eines als "Verkehrsteilnehmer" erkannten Objekts 17 im Normalfall in der Fahrbahnebene 21 befindet.

Bei der Schätzung mittels des Bayes-Schätzers ist also $p$ der gesuchte Parameter. Es gilt nun $p = W/W_R$, wobei $W$ eine Objektbreitenkonstante ist, die normalerweise zum Verfolgen des Objekts 17 mittels Tracking verwendet wird und von einem entsprechenden Tracker bereitgestellt wird, und wobei $W_R$ die unbekannte tatsächliche Breite des Objekts 17 ist. Es wird nun ein finiter Satz von möglichen Objektbreiten $W_R$ und somit von möglichen Skalierungsfaktoren $p$ beruhend auf den verschiedenen durch den Klassifizierer vorgegebenen Objektklassen definiert, um dem Umstand Rechnung zu tragen, dass es häufig Breitenwerte gibt, die für ein bestimmtes Objekt 17 unmöglich sind. Beispielsweise kann zwischen motorisierten Zweiradfahrzeugen einerseits sowie Vierradfahrzeugen andererseits unterschieden werden, wobei die Vierradfahrzeuge getrennt von den Zweiradfahrzeugen behandelt werden:

$$\theta = \begin{cases} \left\{ \dfrac{W}{W_{\min}^{vehicle}}, \ldots, \dfrac{W}{W_{\max}^{vehicle}} \right\}, Fahrzeugtyp = Vierradfahrzeug \\[4mm] \left\{ \dfrac{W}{W_{\min}^{bike}}, \ldots, \dfrac{W}{W_{\max}^{bike}} \right\}, Fahrzeugtyp = Zweiradfahrzeug \end{cases}$$

**5**

Dies führt zu einem finiten Satz von Hypothesen für den derzeit passenden Skalierungsfaktor $p$, welche mit dem Index $i$ gekennzeichnet werden. Für jede dieser Hypothesen $p_i$ kann der Neigungswinkel $\alpha_i^t$ zwischen dem Fußpunkt 19 und der Fahrbahnebene 21 zum Zeitpunkt $t$ angegeben werden:

$$\alpha_t^i = \arctan\left(\frac{\frac{x_w^t}{p_i} + C_{14}}{\frac{z_w^t}{p_i} + C_{34}}\right) \qquad (3)$$

Dabei handelt es sich gemäß Fig. 2 um denjenigen Winkel, den ein Sichtstrahl 24, welcher vom Ursprung 23 der Fahrbahnebene 21 zu dem Fußpunkt 19 des Objekts 17 führt, zu der Fahrbahnebene 21 einnimmt. Der Ursprung 23 der Fahrbahnebene 21 ergibt sich durch senkrechte Projektion des nicht dargestellten Fahrzeugzentrums auf die Fahrbahnebene 21. Bezogen auf die Fahrtrichtung befindet er sich hinter dem Ursprung 25 des Lochkameramodells.

Eine direkte Schätzung des Skalierungsfaktors $p$ mittels eines Bayes-Schätzers bei beobachtetem Winkel $\alpha$ ist aufgrund verschiedener Störeinflüsse wie unvorhersagbarer Nickbewegungen der Bilderfassungseinrichtung 11 nicht zuverlässig genug, um in einem Fahrerassistenzsystem eingesetzt zu werden. Daher wird ein Mittelwert wie z. B. das arithmetische Mittel mehrerer solcher Winkelbeobachtungen verwendet, um die Störungen auszugleichen. Speziell wird die folgende Beobachtung definiert:

$$\overline{\alpha}_i := mean(A_i) \in \Phi, \Phi = \left]-\frac{\pi}{2}, \dots \frac{\pi}{2}\right[, A_i = \{\alpha_i^t | t = 1, \dots, n\}$$

wobei vom Winkel $\alpha$ erwartet wird, dass er normalverteilt um die Fahrbahnebene 21 ist.

Als finiter Satz von Objektklassen kann zum Beispiel $C := \{CAR, VAN, TRUCK\} \cup \{BIKES\}$ definiert werden, wobei CAR für Personenkraftwagen, VAN für Kleintransporter, TRUCK für Lastkraftwagen und BIKES für Motorräder und gegebenenfalls Fahrräder steht. Man erhält dann einen Bayes-Schätzer, welcher die vorstehend beschriebene Winkelbeobachtung mit den von einem Klassifizierer empfangenen Objektklassen $c_c \in C$ unter Verwendung der Grundwahrheitsklassen $c_{gt} \in C$ kombiniert:

$$P(p_i | \overline{\alpha}_i, c_c) = \frac{P(\overline{\alpha}_i, c_c | p_i)P(p_i)}{\sum_{p_i' \in \theta} P(\overline{\alpha}_i, c_c | p_i')} \overset{def}{=} \frac{P(\overline{\alpha}_i | p_i)P(c_c | p_i)\frac{1}{|\theta|}}{\frac{1}{|\theta|}\sum_{p_i' \in \theta} P(\overline{\alpha}_i, c_c | p_i')}$$

$$= \frac{P(\overline{\alpha}_i | p_i)P(c_c | p_i)}{\sum_{p_i' \in \theta} P(\overline{\alpha}_i, c_c | p_i')}$$

Hierbei bezeichnet $P(p_i | \overline{\alpha}_i, c_c)$ die Verteilung des zu schätzenden Parameters $p$ in Abhängigkeit von den beobachteten Winkeln $\alpha$ und Fahrzeugklassen $c_c$. Unter Verwendung der Grundwahrheitsklassen $c_{gt}$ kann folgender Zusammenhang angegeben werden:

$$P(c_c | p_i) = \sum_{c_{gt}} P(c_c, c_{gt} | p_i) = \sum_{c_{gt}} P(c_c | c_{gt}, p_i)P(c_{gt} | p_i)$$

$$= \sum_{c_{gt}} P(c_c | c_{gt})P(c_{gt} | p_i) = \frac{\sum_{c_{gt}} p(c_c | c_{gt})P(p_i | c_{gt})p(c_{gt})}{\sum_{c'_{gt}} P(p_i | c'_{gt})p(c'_{gt})}$$

Bei der Aufstellung der Formeln für den Bayes-Schätzer wurde implizit angenommen, dass die verschiedenen Skalierungsfaktoren $p_i$ gleichmäßig innerhalb des finiten Satzes von möglichen Werten verteilt sind. Es versteht sich, dass diese Annahme willkürlich ist und dass das Schätzverfahren bei Bedarf durch Berücksichtigung von zusätzlichem A-priori-Wissen verbessert werden kann.

Mit Hilfe der vorstehend angegebenen Formeln kann nun der Skalierungsfaktor $p$ unter Verwendung eines Maximum-a-posteriori-Verfahrens - hier durch Bestimmung des Modalwerts der A-posteriori-Verteilung der Beobachtungen - geschätzt werden:

$$p = \arg\max_{p_i}(P(p_i|\overline{\alpha}_i, c_c)) = \arg\max_{p_i}\left(\frac{P(\overline{\alpha}_i|p_i)\sum_{c_{gt}}P(c_c|c_{gt})P(p_i|c_{gt})P(c_{gt})}{\sum_{p'_i \in \theta}P(\overline{\alpha}_i, c_c|p'_i)\sum_{c'_{gt}}P(p_i|c'_{gt})P(c'_{gt})}\right)$$

$$= \arg\max_{p_i}\frac{P(\overline{\alpha}_i|p_i)\sum_{c_{gt}}P(c_c|c_{gt})P(p_i|c_{gt})P(c_{gt})}{\sum_{c'_{gt}}P(p_i|c'_{gt})P(c'_{gt})} \qquad (4)$$

Sofern sichergestellt ist, dass $P(c_c|c_{gt}) \neq 0$, $P(p_i|c_{gt}) \neq 0$ und $P(c_{gt}) \neq 0$ für wenigstens ein $c_{gt} \in C$, kann eine logarithmische Version von Formel (4) verwendet werden:

$$p = \arg\max_{p_i}(P(p_i|\overline{\alpha}_i, c_c))$$

$$= \arg\max_{p_i}(\ln(P(\overline{\alpha}_i|p_i)) + \ln(\sum_{c_{gt}}P(c_c|c_{gt})P(p_i|c_{gt})P(c_{gt})) - \ln(\sum_{c'_{gt}}P(p_i|c'_{gt})P(c'_{gt}))) \qquad (5)$$

$P(\overline{\alpha}_i)|p_i$ wird in jedem Zeitschritt unter Verwendung von Formel (3) berechnet. Die letzten beiden Summanden der logarithmischen Formel (5) können vor dem Beginn des Verfahrens berechnet und in einer Nachschlagetabelle abgelegt werden, da sie nicht von der Zeit abhängen.

$P(c_c|c_{gt})$ wird aus der Klassenkonfusionsmatrix des Klassifizierers abgeleitet und $P(c_{gt})$ ist die A-priori-Wahrscheinlichkeit für eine bestimmte Objektklasse. $P(p_i|c_{gt})$ wird zum Beispiel auf die folgende Art und Weise gewählt:

$$P(p_i|c_{gt}) = \begin{cases} \dfrac{1}{\left|\left\{p'_i\left|\dfrac{W}{p'_i} \in I_{c_{gt}}, p'_i \in \theta\right.\right\}\right|}, & \dfrac{W}{p_i} \in I_{c_{gt}} \\ 0, sonst \end{cases}$$

wobei $I_{c_{gt}}$ jeweils die Objektbreiten enthält, die für den betreffenden Fahrzeugtyp möglich sind (CAR, VAN, TRUCK oder BIKE). Anstelle einer Gleichverteilung in dem entsprechenden Intervall könnte auch für jede Grundwahrheitsklasse $c_{gt}$ eine andere Verteilung verwendet werden.

Nach dem Schätzen des Skalierungsfaktors $p$ kann der Abstand $d$ des erkannten Objekts 17 von dem Kraftfahrzeug folgendermaßen berechnet werden:

$$d = \left\|\frac{1}{p} \cdot \begin{pmatrix} \widetilde{x}_w \\ \widetilde{y}_w \\ \widetilde{z}_w \end{pmatrix} + C_4^{-1}\right\|_2$$

Zusätzlich wird der geschätzte Skalierungsfaktor $p$ als Eingabe für denjenigen rekursiven Zustandsschätzer verwendet, der zur Verfolgung der Bewegung des Objekts 17 mittels eines Tracking-Verfahrens dient. Hierbei kann es sich insbesondere um einen Kalman-Filter handeln.

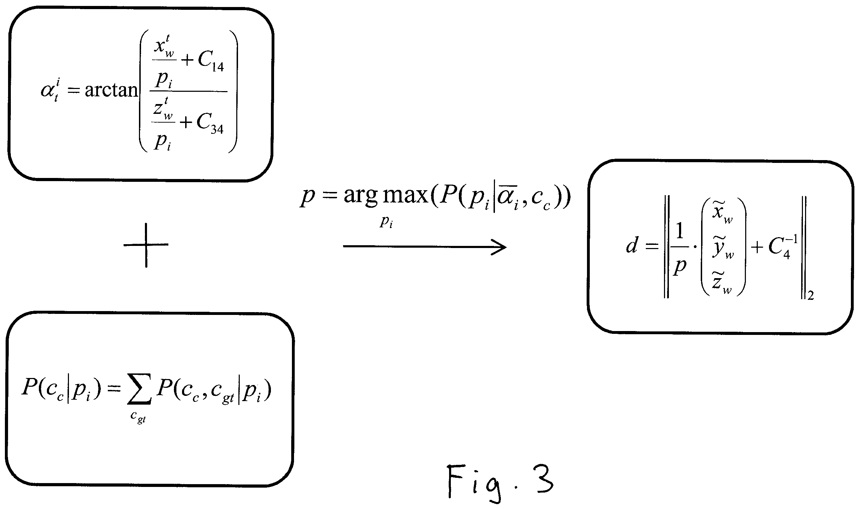

Aufgrund der Fusion des in unterschiedlicher Form vorliegenden Vorwissens mittels des speziellen Bayes-Schätzers, welche in Fig. 3 veranschaulicht ist, ist eine besonders robuste Schätzung des Skalierungsfaktors und demzufolge eine besonders zuverlässige Bestimmung des Objektabstands möglich.

**Bezugszeichenliste**

| 11 | Bilderfassungseinrichtung |
|----|---------------------------|
| 13 | Bildverarbeitungssystem |
| 17 | Objekt |
| 19 | Fußpunkt |
| 21 | Fahrbahnebene |
| 23 | Ursprung der Fahrbahnebene |
| 24 | Sichtstrahl |
| 25 | Ursprung des Lochkameramodells |

**Patentansprüche**

1. Verfahren zum Bestimmen des Abstands (d) eines Objekts (17) von einem Kraftfahrzeug mittels einer monokularen Bilderfassungseinrichtung (11), die in einer vorgegebenen Höhe (h) über der Fahrbahnebene (21) an dem Kraftfahrzeug angeordnet ist, wobei
   mittels der monokularen Bilderfassungseinrichtung (11) in zeitlichen Abständen Bilder der Fahrzeugumgebung aufgenommen werden,
   mittels eines Bildverarbeitungssystems (13) in den aufgenommenen Bildern wenigstens ein interessierendes Objekt (17) erkannt und einer Objektklasse zugeordnet wird,
   aus den aufgenommenen Bildern unter Verwendung eines Lochkameramodells beruhend auf der Objektklasse jeweilige Positionsangaben ermittelt werden, welche die Lage eines Bezugspunkts (19) des erkannten Objekts (17) bezogen auf die Fahrbahnebene (21) in Weltkoordinaten angeben, ein Skalierungsfaktor (p) des Lochkameramodells mittels eines Bayes-Schätzers unter Verwendung der Positionsangaben als Beobachtungen sowie unter der Annahme, dass sich der Bezugspunkt (19) des erkannten Objekts (17) mit einer vorgegebenen Wahrscheinlichkeit auf der Fahrbahnebene (21) befindet, geschätzt wird, und
   aus dem geschätzten Skalierungsfaktor (p) unter Verwendung des Lochkameramodells der Abstand (d) des erkannten Objekts (17) von dem Kraftfahrzeug berechnet wird.

2. Verfahren nach Anspruch 1,
   **dadurch gekennzeichnet, dass** dem Bayes-Schätzer als weitere Annahme zugrunde gelegt wird, dass die Breite des erkannten und einer Objektklasse zugeordneten Objekts (17) mit einer vorgegebenen Wahrscheinlichkeit einen von mindestens einem der Objektklasse zugeordneten Standardwert annimmt.

3. Verfahren nach Anspruch 2,
   **dadurch gekennzeichnet, dass** der Annahme, dass sich der Bezugspunkt (19) des erkannten Objekts (17) mit einer vorgegebenen Wahrscheinlichkeit auf der Fahrbahnebene (21) befindet, durch eine kontinuierliche A-priori-Verteilung modelliert wird, wohingegen die Annahme, dass die Breite des erkannten Objekts (17) mit einer vorgegebenen Wahrscheinlichkeit einen Standardwert annimmt, durch eine diskrete A-priori-Verteilung modelliert wird.

4. Verfahren nach einem der vorstehenden Ansprüche,
   **dadurch gekennzeichnet, dass** als Beobachtungen für den Bayes-Schätzer Ergebnisse einer zeitlichen Filterung der Positionsangaben verwendet werden, insbesondere wobei für die Positionsangaben zeitliche Mittelwerte über jeweils mehrere nacheinander aufgenommene Bilder gebildet werden.

5. Verfahren nach einem der vorstehenden Ansprüche,
   **dadurch gekennzeichnet, dass** der Skalierungsfaktor (p) des Lochkameramodells durch Bestimmung des Modalwerts der A-posteriori-Verteilung der Beobachtungen geschätzt wird.

6. Verfahren nach einem der vorstehenden Ansprüche,
   **dadurch gekennzeichnet, dass** als Positionsangabe jeweils der Neigungswinkel verwendet wird, den ein Sichtstrahl (24), welcher vom senkrecht auf die Fahrbahnebene (21) projizierten Fahrzeugzentrum des Kraftfahrzeugs oder einem in bekanntem Abstand zu diesem angeordneten Fixpunkt zu dem Bezugspunkt (19) des Objekts (17)

führt, zu der Fahrbahnebene (21) einnimmt.

7. Verfahren nach Anspruch 6,
**dadurch gekennzeichnet, dass** als A-priori-Verteilung des Neigungswinkels eine Normalverteilung um den Wert Null festgelegt wird.

8. Verfahren nach einem der vorstehenden Ansprüche,
**dadurch gekennzeichnet, dass** die Bewegung des erkannten Objekts (17) mittels eines Tracking-Verfahrens verfolgt wird, welches einen rekursiven Zustandsschätzer, insbesondere einen Kalman-Filter, verwendet, und dass der geschätzte Skalierungsfaktor (p) als Eingabe für den rekursiven Zustandsschätzer verwendet wird.

9. Verfahren nach einem der vorstehenden Ansprüche,
**dadurch gekennzeichnet, dass** das erkannte Objekt (17) mittels eines Klassifizierers einer von mehreren Objektklassen zugeordnet wird, wobei für jede Objektklasse ein separater Breitenbereich und/oder ein separater Satz von diskreten Breitenwerten zur Festlegung der A-priori-Verteilung der Breite des erkannten Objekts (17) definiert ist.

10. Verfahren nach Anspruch 9,
**dadurch gekennzeichnet, dass** das erkannte Objekt (17) mittels des Klassifizierers einer der Objektklassen "Vierradfahrzeuge" und "Zweiradfahrzeuge" zugeordnet wird, wobei, bevorzugt, ein der Objektklasse "Vierradfahrzeuge" zugeordnetes Objekt einer der Unterklassen "Personenkraftwagen", "Kleintransporter" und "Lastwagen" zugeordnet wird.

11. Verfahren nach einem der Ansprüche 9 oder 10,
**dadurch gekennzeichnet, dass** eine Grundwahrheit des Klassifizierers zum Lösen der Gleichungen des Bayes-Schätzers verwendet wird.

12. Verfahren nach einem der vorstehenden Ansprüche,
**dadurch gekennzeichnet, dass** für ein erkanntes Objekt und insbesondere für jedes erkannte Objekt ein kleinstes umschließendes Rechteck bestimmt wird, wobei als Bezugspunkt des erkannten Objekts (17) ein am unteren Rand des kleinsten umschließenden Rechtecks befindlicher Fußpunkt (19) gewählt wird.

13. Vorrichtung zum Erkennen und Verfolgen eines Objekts (17) von einem Kraftfahrzeug aus, mit einer monokularen Bilderfassungseinrichtung (11), welche in einer vorgegebenen Höhe (h) über der Fahrbahnebene (21) an dem Kraftfahrzeug angeordnet ist und welche zum Aufnehmen von Bildern der Fahrzeugumgebung in zeitlichen Abständen ausgebildet ist, und mit einem Bildverarbeitungssystem (13), das zum Durchführen eines Verfahrens nach einem der vorstehenden Ansprüche ausgebildet ist.

14. Computerprogrammprodukt, das Programmanweisungen enthält, die ein Verfahren nach einem der Ansprüche 1 bis 12 ausführen, wenn das Computerprogramm auf einem Computer ausgeführt wird.

**Claims**

1. Method for determining the distance (d) between an object (17) and a motor vehicle by means of a monocular imaging device (11) which is arranged at a predetermined height (h) above the road level (21) on the motor vehicle, wherein
by means of the monocular imaging device (11) images of the vehicle surroundings are captured at time intervals,
by means of an image processing system (13) at least one object of interest (17) is detected in the captured images and assigned to an object class,
from the captured images using a pinhole camera model based on the object class, respective position information is determined which is indicative of the location of a reference point (19) of the detected object (17) relative to the road level (21) in world coordinates,
a scale factor (p) of the pinhole camera model is estimated using a Bayesian estimator using the position information as observations, and assuming that the reference point (19) of the detected object (17) is on the road level (21) with a predetermined probability, and
from the estimated scaling factor (p), using the pinhole camera model, the distance (d) between the detected object (17) and the motor vehicle is calculated.

**2.** Method according to Claim 1,
**characterized in that**
the Bayesian estimator is based on a further assumption that the width of the detected object (17) assigned to an object class assumes at least one default value associated with the object class with a predetermined probability.

**3.** Method according to claim 2,
**characterized in that**
the assumption that the reference point (19) of the detected object (17) is at the road level (21) with a predetermined probability is modeled by a continuous a-priori distribution, whereas the assumption that the width of the detected object (17) assumes a default value with a predetermined probability, is modeled by a discrete a-priori distribution.

**4.** Method according to one of the preceding claims,
**characterized in that**
results of a temporal filtering of the position information are used as observations for the Bayesian estimator, wherein, in particular, temporal mean values are formed for a respective plurality of successively captured images for the position information.

**5.** Method according to one of the preceding claims,
**characterized in that**
the scaling factor (p) of the pinhole camera model is estimated by determining the modal value of the a-posteriori distribution of the observations.

**6.** Method according to one of the preceding claims,
**characterized in that**
as the position information, the respective angle of inclination is used, which a viewing beam (24), which leads from the vehicle center of the motor vehicle, perpendicularly projected to the road level (21), or from a fixed point at a known distance thereto to the reference point (19) of the object (17), has to the road level (21).

**7.** Method according to claim 6,
**characterized in that**
a normal distribution about the value zero is set as a-priori distribution of the angle of inclination.

**8.** Method according to one of the preceding claims,
**characterized in that**
the movement of the detected object (17) is tracked by means of a tracking method which uses a recursive state estimator, in particular a Kalman filter, and **in that** the estimated scaling factor (p) is used as input for the recursive state estimator.

**9.** Method according to one of the preceding claims,
**characterized in that**
the detected object (17) is assigned to one of a plurality of object classes by means of a classifier, wherein for each object class a separate width range and/or a separate set of discrete width values is defined to set the a-priori distribution of the width of the detected object (17).

**10.** Method according to claim 9,
**characterized in that**
the detected object (17) is assigned by the classifier to one of the object classes "four-wheeled vehicles" and "two-wheeled vehicles", wherein, preferably, an object assigned to the object class "four-wheeled vehicles" is assigned to one of the subclasses "passenger car", "utility van" and "truck".

**11.** Method according to one of claims 9 or 10,
**characterized in that**
a basic truth of the classifier is used to solve the equations of the Bayes estimator.

**12.** Method according to one of the preceding claims,
**characterized in that**
for a detected object and in particular for each detected object a smallest enclosing rectangle is determined, wherein as a reference point of the detected object (17) a base point (19) is selected which is located at the bottom edge of the smallest enclosing rectangle.

13. Device for recognizing and tracking an object (17) from a motor vehicle, having a monocular imaging device (11) which is arranged at a predetermined height (h) above the road level (21) on the motor vehicle and which is adapted to capture images of the vehicle surroundings at time intervals, and having an image processing system (13), which is adapted to perform a method according to any one of the preceding claims.

14. Computer program product containing program instructions executing a method according to any one of claims 1 to 12 when the computer program is run on a computer.

**Revendications**

1. Procédé pour déterminer la distance (d) d'un objet (17) par rapport à un véhicule automobile à l'aide d'un moyen d'acquisition d'images monoculaire (11) qui est disposé sur le véhicule automobile à une hauteur (h) prédéfinie au-dessus du plan de chaussée (21), dans lequel
des images de l'environnement du véhicule sont enregistrées à intervalles réguliers à l'aide du moyen d'acquisition d'images monoculaire (11),
au moins un objet d'intérêt (17) est détecté dans les images enregistrées et affecté à une classe d'objets à l'aide d'un système de traitement d'images (13),
des indications de position respectives sont déterminées à partir des images enregistrées en utilisant un modèle de caméra à sténopé sur la base de la classe d'objets, lesquelles indiquent en coordonnées universelles la position d'un point de référence (19) de l'objet détecté (17) par rapport au plan de chaussée (21),
un facteur d'échelle (p) du modèle de caméra à sténopé est estimé à l'aide d'un estimateur bayésien en utilisant les indications de position comme observations et en faisant l'hypothèse que le point de référence (19) de l'objet détecté (17) se trouve, avec une probabilité prédéfinie, sur le plan de chaussée (21), et
la distance (d) de l'objet détecté (17) par rapport au véhicule automobile est calculée à partir du facteur d'échelle estimé (p) en utilisant le modèle de caméra à sténopé.

2. Procédé selon la revendication 1,
**caractérisé en ce que** l'estimateur bayésien est basé sur l'hypothèse supplémentaire que la largeur de l'objet (17) détecté et affecté à une classe d'objets prend, avec une probabilité prédéfinie, une valeur parmi au moins une valeur standard affectée à la classe d'objets.

3. Procédé selon la revendication 2,
**caractérisé en ce que** l'hypothèse selon laquelle le point de référence (19) de l'objet détecté (17) se trouve sur le plan de chaussée (21) avec une probabilité prédéfinie est modélisée par une distribution a priori continue, tandis que l'hypothèse selon laquelle la largeur de l'objet détecté (17) prend une valeur standard avec une probabilité prédéfinie est modélisée par une distribution a priori discrète.

4. Procédé selon l'une des revendications précédentes,
**caractérisé en ce que** les résultats d'un filtrage temporel des indications de position sont utilisés comme observations pour l'estimateur bayésien, en particulier des valeurs moyennes temporelles pour les indications de position étant formées sur plusieurs images enregistrées successivement.

5. Procédé selon l'une des revendications précédentes,
**caractérisé en ce que** le facteur d'échelle (p) du modèle de caméra à sténopé est estimé en déterminant la valeur modale de la distribution a posteriori des observations.

6. Procédé selon l'une des revendications précédentes,
**caractérisé en ce que** l'on utilise comme indication de position l'angle d'inclinaison par rapport au plan de chaussée (21) que prend un faisceau de vision (24) qui va du centre du véhicule automobile projeté perpendiculairement sur le plan de chaussée (21) ou d'un point fixe disposé à une distance connue de celui-ci au point de référence (19) de l'objet (17).

7. Procédé selon la revendication 6,
**caractérisé en ce qu'**une distribution normale autour de la valeur zéro est définie comme la distribution a priori de l'angle d'inclinaison.

**8.** Procédé selon l'une des revendications précédentes,
**caractérisé en ce que** le mouvement de l'objet détecté (17) est suivi au moyen d'un procédé de poursuite qui utilise un estimateur d'état récursif, en particulier un filtre de Kalman, et **en ce que** le facteur d'échelle estimé (p) est utilisé comme entrée pour l'estimateur d'état récursif.

**9.** Procédé selon l'une des revendications précédentes,
**caractérisé en ce que** l'objet détecté (17) est affecté à l'une de plusieurs classes d'objets au moyen d'un classificateur, une plage de largeurs séparée et/ou un ensemble séparé de valeurs de largeur discrètes étant définis pour chaque classe d'objets pour déterminer la distribution a priori de la largeur de l'objet détecté (17).

**10.** Procédé selon la revendication 9,
**caractérisé en ce que** l'objet détecté (17) est affecté à l'aide du classificateur à l'une des classes d'objets « véhicules à quatre roues » et « véhicules à deux roues », un objet affecté à la classe d'objets « véhicules à quatre roues » étant de préférence affecté à l'une des sous-classes « voitures particulières », « camionnettes » et « camions ».

**11.** Procédé selon l'une des revendications 9 ou 10,
**caractérisé en ce qu'**une vérité-terrain du classificateur est utilisée pour résoudre les équations de l'estimateur bayésien.

**12.** Procédé selon l'une des revendications précédentes,
**caractérisé en ce qu'**un plus petit rectangle enveloppant est déterminé pour un objet détecté et en particulier pour chaque objet détecté, un point de base (19) situé sur le bord inférieur du plus petit rectangle enveloppant étant sélectionné comme point de référence de l'objet détecté (17).

**13.** Dispositif pour détecter et suivre un objet (17) à partir d'un véhicule automobile, comprenant un moyen d'acquisition d'images monoculaire (11) qui est disposé sur le véhicule automobile à une hauteur prédéfinie (h) au-dessus du plan de chaussée (21) et qui est conçu pour enregistrer des images de l'environnement du véhicule à intervalles réguliers, et comprenant un système de traitement d'images (13) qui est conçu pour mettre en oeuvre un procédé selon l'une des revendications précédentes.

**14.** Produit programme informatique qui contient des instructions de programme qui mettent en oeuvre un procédé selon l'une des revendications 1 à 12 lorsque le programme informatique est exécuté sur un ordinateur.

Fig. 1

Fig. 2

EP 3 038 011 B1

$$\alpha_t^i = \arctan\left(\frac{\dfrac{x_w^t}{p_i} + C_{14}}{\dfrac{z_w^t}{p_i} + C_{34}}\right)$$

$+$

$$P(c_c | p_i) = \sum_{c_{gt}} P(c_c, c_{gt} | p_i)$$

$$p = \underset{p_i}{\arg\max}\,(P(p_i | \overline{\alpha}_i, c_c))$$

$$d = \left\| \frac{1}{p} \cdot \begin{pmatrix} \widetilde{x}_w \\ \widetilde{y}_w \\ \widetilde{z}_w \end{pmatrix} + C_4^{-1} \right\|_2$$

Fig. 3

**IN DER BESCHREIBUNG AUFGEFÜHRTE DOKUMENTE**

**In der Beschreibung aufgeführte Patentdokumente**

- EP 2562681 A1